# FASCICULE DE BREVET EUROPEEN

(11) **EP 1 064 489 B1**
(45) Date de publication et mention de la délivrance du brevet: **04.02.2004**
(21) Numéro de dépôt: 99909075.6
(22) Date de dépôt: 23.03.1999
(51) Int. Cl.: F16L 37/084

(54) **RACCORD ENCLIQUETABLE POUR TUYAUX**
STECK-KUPPLUNG FÜR ROHRE
SNAP-ON PIPE FITTING

(30) Priorité: 27.03.1998 FR 9803818
(43) Date de publication de la demande: 03.01.2001
(73) Titulaire: HUTCHINSON, 75008 Paris (FR)
(72) Inventeur: GODEAU, Denis, F-45260 Vieilles Maisons/Joudry (FR); EXANDIER, Philippe, F-45700 Panne (FR)
(74) Mandataire: Doireau, Marc
(86) Numéro de dépôt international: PCT/FR1999/000674
(87) Numéro de publication internationale: WO 1999/050583

(56) Documents cités:
- EP-A- 0 670 449
- EP-A- 0 728 980
- DE-A- 19 637 276
- DE-C- 4 037 306
- DE-U- 29 610 487
- US-A- 1 028 937

## Description

L'invention concerne un raccord encliquetable pour un tuyau de transfert de fluide, notamment pour véhicule automobile, ce raccord étant destiné à des tuyaux de transfert de fluide à basse pression, tels par exemple que des tuyaux d'un circuit de refroidissement de moteur à combustion interne.

Les raccords pour tuyau de ce type comprennent, le plus souvent, un insert tubulaire monté à l'intérieur d'un tuyau souple en caoutchouc ou à base de caoutchouc ou analogue qui doit être raccordé sur un embout tubulaire d'un circuit de fluide, cet embout étant destiné à être introduit de façon étanche à l'intérieur de l'insert. La fixation du tuyau sur l'insert est en général assurée au moyen d'une bague de sertissage qui vient serrer le tuyau à étanchéité sur l'insert.

L'étanchéité de la connexion avec l'embout est assurée par un joint d'étanchéité agencé entre l'embout et l'insert. Des moyens de verrouillage de la connexion sont en général prévus, ces moyens entourant le tuyau et l'embout et coopérant avec l'un d'entre eux par encliquetage élastique pour maintenir l'embout engagé dans l'insert.

On connaît du document DE - 29610 487 un raccord encliquetable qui comprend des moyens de verrouillage correspondant au préambule de la revendication 1, sachant que ces moyens de verrouillage sont formés d'une seule pièce.

Ces raccords doivent être aussi simples et aussi peu coûteux que possible et doivent en même temps être d'une grande fiabilité. Il est souhaitable qu'ils soient en plus faciles et rapides à assembler et qu'ils permettent une déconnexion du tuyau et de l'embout par une manoeuvre simple et rapide, de préférence exécutable à la main sans outil.

L'invention a notamment pour but de répondre à ce besoin, grâce à un raccord encliquetable satisfaisant à toutes les conditions énoncées ci-dessus.

Elle propose à cet effet un raccord, comprenant un insert tubulaire monté à l'intérieur d'un tuyau souple à raccorder sur un embout tubulaire d'un circuit de fluide, cet embout étant destiné à être introduit de façon étanche à l'intérieur de l'insert et comportant une saillie périphérique au voisinage de son extrémité libre, et des moyens de verrouillage de la connexion du tuyau et de l'embout, ces moyens entourant le tuyau et l'embout et coopérant avec l'embout par encliquetage élastique pour maintenir l'embout engagé dans l'insert, les moyens de verrouillage comprenant, du côté du tuyau, une partie annulaire cylindrique entourant le tuyau et le serrant à étanchéité sur l'insert et, du côté de l'embout, des pattes longitudinales élastiquement déformables qui sont rattachées à la partie annulaire précitée et qui coopèrent par accrochage avec la saillie périphérique de l'embout pour s'opposer à la déconnexion du tuyau et de l'embout, caractérisé en ce que les moyens de verrouillage sont formés de deux pièces semi-cylindriques, comprenant des moyens de fixation l'une sur l'autre, et en ce que lesdites pattes longitudinales sont rattachées, du côté de l'embout, à deux parties semi-annulaires diamètralement opposées l'une à l'autre et formant des moyens d'accrochage sun la saillie périphérique de l'embout.

Dans le raccord selon l'invention, les moyens de verrouillage cumulent les fonctions de fixation étanche du tuyau sur l'insert et de maintien de la connexion du tuyau et de l'embout par encliquetage élastique sur l'embout.

Avantageusement, ces deux pièces semi-cylindriques sont identiques et leurs moyens de fixation l'une sur l'autre sont du type à encliquetage élastique.

Dans une forme de réalisation, ces pièces sont en matière plastique comportant une charge de renforcement, par exemple en polyamide chargé de fibres de verre.

En variante, ces pièces sont métalliques.

Selon encore une autre caractéristique de l'invention, les parties semi-cylindriques des moyens de verrouillage qui coopèrent par accrochage avec la saillie périphérique de l'embout, comprennent des pattes latérales permettant, par poussée sur ces pattes dans des directions opposées, d'écarter l'une de l'autre ces parties semi-cylindriques pour les dégager de la saillie périphérique de l'embout et permettre la déconnexion du tuyau et de l'embout.

Cette déconnexion est réalisable facilement, à la main et sans outil particulier.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de face d'un raccord selon l'invention ;
- la figure 2 est une vue en perspective éclatée de ce raccord ;
- la figure 3 est une vue schématique en coupe axiale d'une variante de réalisation de ce raccord ;
- les figures 4 et 5 sont des vues de dessus et de face respectivement de ce raccord ;
- la figure 6 est une vue schématique en perspective d'une variante de réalisation des moyens de verrouillage ;
- les figures 7, 8 et 9 sont des vues en perspective et en coupe axiale d'une variante de réalisation du raccord ;
- la figure 10 est une vue en coupe axiale d'une autre variante du raccord.

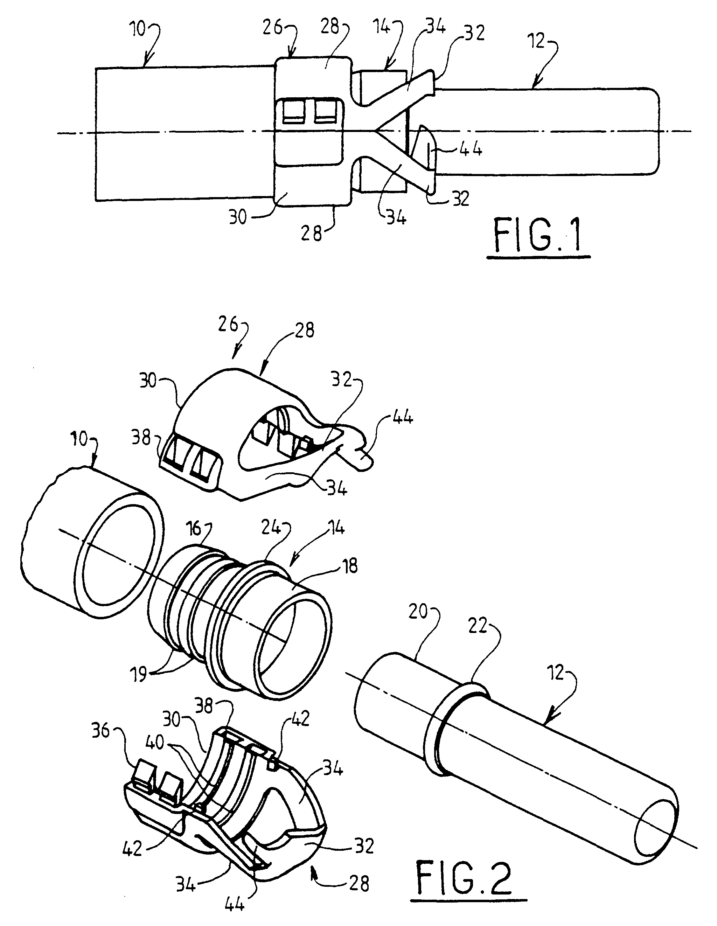

On se réfère d'abord aux figures 1 et 2, qui représentent un premier mode de réalisation d'un raccord selon l'invention, permettant la connexion et la déconnexion rapide d'un tuyau 10 et d'un embout tubulaire 12 d'un circuit de fluide, le tuyau 10 étant typiquement en caoutchouc ou à base de caoutchouc ou analogue, avec éventuellement un renfort textile, l'embout tubulaire 12 étant réalisé en toute matière rigide appropriée, par exemple en matière plastique ou en métal.

Le raccord selon l'invention comprend un insert tubulaire cylindrique 14, réalisé notamment en matière plastique rigide et comprenant une extrémité 16 destinée à être introduite à force dans le tuyau 10 et une extrémité 18 destinée à recevoir l'extrémité libre 20 de l'embout 12.

La surface extérieure de l'extrémité 16 de l'insert 14 est formée avec une ou plusieurs nervures annulaires 19 du type en "sapin" par exemple, qui améliorent la fixation du tuyau 10 sur l'insert 14 et l'étanchéité de cette fixation.

L'autre extrémité 18 de l'embout 14 est de forme cylindrique et comporte, par exemple, un joint en caoutchouc surmoulé sur sa surface interne et destiné à assurer l'étanchéité avec l'extrémité libre 20 de l'embout 12.

Cet embout comprend, au voisinage de son extrémité libre 20, une saillie annulaire périphérique 22 dont le diamètre extérieur est sensiblement égal ou très légèrement inférieur au diamètre interne de l'extrémité 18 de l'insert 14, pour être reçue avec un jeu très faible à l'intérieur de cette extrémité 18.

Avantageusement, l'insert 14 comprend une nervure annulaire 24 en saillie sur sa surface extérieure, pour former une séparation entre ses extrémités 16 et 18 et assurer par butée un positionnement axial précis du tuyau 10 sur l'insert 14.

Des moyens 26 de verrouillage de la connexion du tuyau 10 et de l'insert 14 sur l'embout 12 sont formés de deux pièces 28 semi-cylindriques qui ont pour fonction d'assurer par serrage la fixation étanche du tuyau 10 sur l'insert 14 et le maintien de l'embout 12 à l'intérieur de l'insert 14, par encliquetage ou accrochage sur la saillie périphérique 22 de cet embout.

Chaque pièce 28 est par exemple en matière plastique comportant une charge de renforcement, en particulier en polyamide chargé de fibres de verre, et comprend une partie arrière ou partie "côté tuyau" 30 en forme de demi cylindre et une partie avant 32 ou partie "côté embout" de forme semi-annulaire rattachée à la partie arrière 30 par deux pattes longitudinales 34.

Les deux pièces 28 sont fixées l'une à l'autre par encliquetage et comprennent à cet effet des griffes ou crochets 36 le long d'un bord de leur partie semi-cylindrique 30, et des logements 38 destinés à recevoir ces griffes sur l'autre bord de leur partie semi-cylindrique 30. Comme on le voit en figure 2, il suffit de disposer les deux pièces 28 de part et d'autre du tuyau 10 enfilé sur l'insert 14 et de les pousser l'une vers l'autre pour fixer les moyens de verrouillage 26 sur la partie du tuyau 10 enfilée sur l'insert 14 et fixer cette partie du tuyau 10 à étanchéité sur l'insert.

Pour améliorer cette étanchéité et cette fixation, des nervures annulaires 40 peuvent être formées sur les surfaces internes des parties semi-cylindriques 30 des pièces 28 et sont décalées en quinconce par rapport aux nervures 19 de l'embout 14 de façon à venir comprimer les parties du tuyau 10 qui se trouvent entre deux nervures annulaires 19, et réciproquement.

En outre, chaque pièce 28 peut comprendre deux butées 42 permettant de la positionner en appui sur le rebord périphérique 24 de l'insert 14.

Lorsque les deux pièces 28 sont assemblées l'une à l'autre comme représenté en figure 1, la distance radiale ou transversale entre leurs extrémités avant 32 est inférieure au diamètre de la nervure périphérique 22 de l'embout 12. En conséquence, lorsque celui-ci est engagé à l'intérieur de l'insert 14, les extrémités avant 32 des moyens de verrouillage 26 sont écartées élastiquement l'une de l'autre au passage de la nervure périphérique 22, puis retombent en appui sur l'embout 12 derrière cette nervure, en empêchant le retrait de l'embout hors de l'insert 14.

Avantageusement, chaque extrémité avant 32 d'une pièce 28 comporte une patte latérale 44 qui, dans l'exemple représenté, s'étend de façon à peu près tangentielle à cette extrémité avant 32. En appuyant avec deux doigts sur les pattes 44 dans des directions opposées, on peut ouvrir la partie avant des moyens de verrouillage 26 et écarter suffisamment les extrémités 32 l' une de l' autre pour permettre le passage de la nervure périphérique 22 de l'embout 12 et dégager cet embout de l'insert 14.

Dans une variante de réalisation, les deux pièces 28 peuvent être reliées l'une à l'autre par une charnière souple formée sur leur parties arrière 30 le long d'une génératrice, c'est-à-dire parallèlement à leur axe longitudinal.

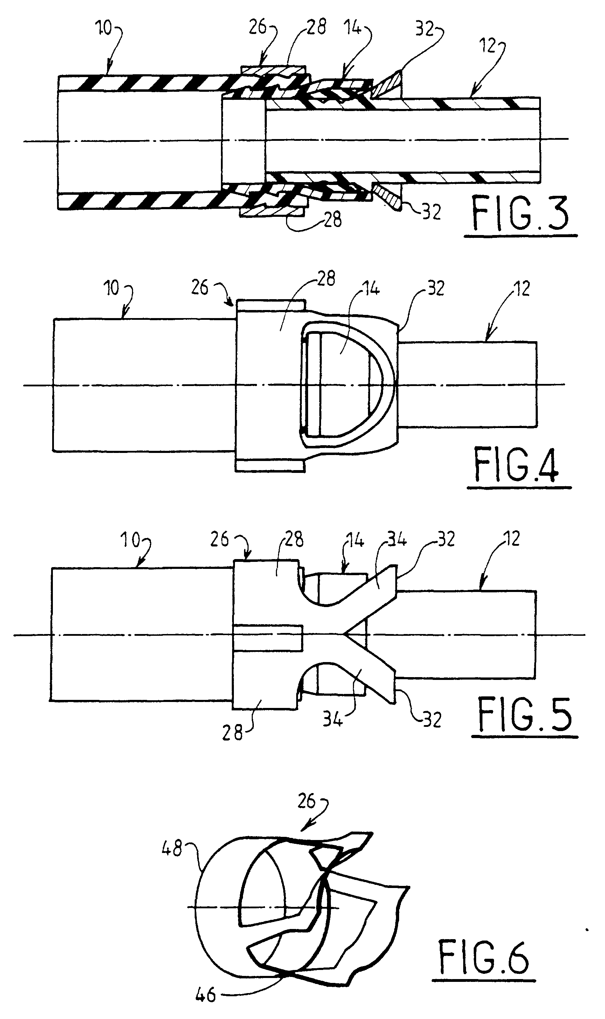

Dans la variante représentée schématiquement aux figures 3 à 5, le raccord encliquetable a Sensiblement la même structure que celui des figures 1 et 2, mais est réalisé en métal, par exemple en acier ou en aluminium. Comme dans le mode de réalisation précédent, il est formé de deux pièces semi-cylindriques 28 qui sont fixées l'une à l'autre par encliquetage.

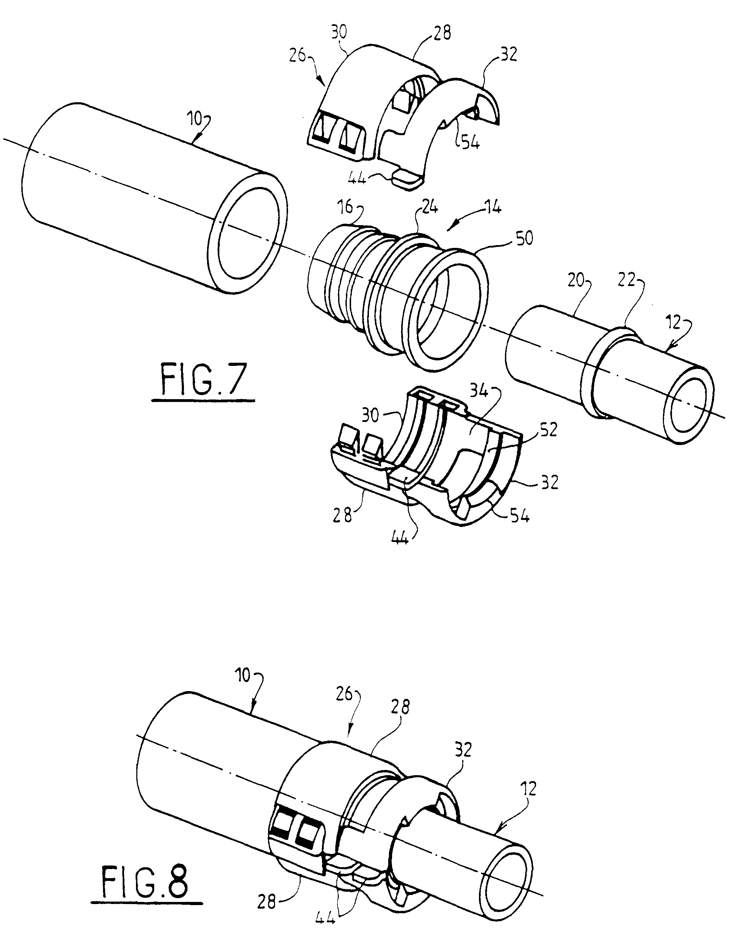

Dans une autre variante représentée en figure 6, les moyens de verrouillage 26 sont constitués d'une seule pièce métallique 46 comportant une extrémité arrière cylindrique 48 entourant la partie du tuyau 10 montée sur l'insert 14, et fixée sur cette partie du tuyau par sertissage, en assurant du même coup la fixation étanche du tuyau 10 sur l'insert 14.

Dans la variante de réalisation représentée aux figures 7, 8 et 9, les moyens de verrouillage 26 sont formés de deux pièces semi-cylindriques 28 en matière plastique, qui sont identiques en ce qui concerne leur partie arrière 30 et qui sont l'image l'une de l'autre dans un miroir en ce qui concerne leur partie avant 32, ces pièces 28 présentant sensiblement les mêmes caractéristiques que celles des figures 1 et 2, à l'exception de celles énoncées ci-dessous :

Tout d'abord, la partie avant 32 de chaque pièce 28 n'est rattachée à la partie arrière 30 que par une seule branche longitudinale 34 et comprend, à son extrémité non rattachée à la partie arrière 30, une patte latérale 44 qui s'étend perpendiculairement à cette extrémité, comme on le voit bien en figure 7.

De plus, la partie avant de l'insert 14 se termine par une collerette annulaire 50 et chaque pièce 28 des moyens de verrouillage 26 comprend, sur sa surface interne, une nervure semi-circulaire 52 destinée à coopérer par butée avec cette collerette annulaire 50 de l'insert 14.

Enfin, la partie avant 32 de chaque pièce 28 comporte, dans sa partie médiane, une dent d'accrochage 54 orientée radialement vers l'intérieur et destinée à coopérer avec la saillie périphérique 22 de l'embout 12.

L'assemblage et la fixation des moyens de verrouillage 26 sur la partie du tuyau 10 enfilée sur l'insert 14 se font de la façon déjà décrite en référence aux figures 1 et 2, par disposition des deux pièces 28 de part et d'autre de l'extrémité du tuyau 10 et poussée de ces deux pièces l'une vers l'autre pour les fixer par encliquetage et fixer simultanément le tuyau 10 à étanchéité sur l'insert 14.

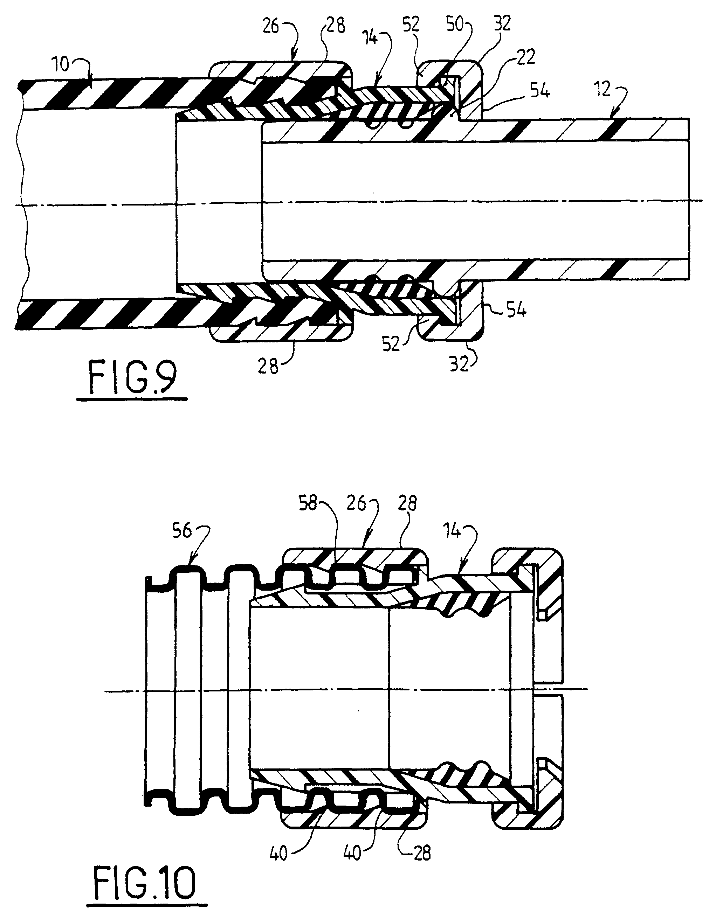

Comme précédemment, la connexion est établie en poussant le tuyau 10 et l'insert 14 sur l'extrémité 20 de l'embout 12, jusqu'à ce que les dents d'accrochage 54 se trouvent au-delà de la saillie périphérique 22 de l'embout 12 (figures 8 et 9).

Si l'on exerce alors un effort sur le tuyau 10 et/ou sur l'embout 12 tendant à les séparer l'un de l'autre, l'effort d'arrachement qui est appliqué par la saillie périphérique 22 de l'embout 12 aux dents d'accrochage 54 des moyens de verrouillage 26, est repris par la collerette annulaire 50 de l'embout 14, en raison de la butée des nervures internes 52 des pièces 28 sur cette collerette annulaire.

Le raccord selon l'invention peut ainsi résister à des efforts axiaux d'arrachement relativement élevés.

Par ailleurs, la déconnexion du tuyau 10 et de l'embout 12 se fait simplement et aisément, en poussant sur les pattes 44 avec deux doigts dans des directions opposées. Ce geste est facilité lorsque les deux pattes 44 sont au voisinage l'une de l'autre (figure 8) et lorsque les parties avant 32 des pièces 28 sont rattachées aux parties arrière par une seule branche longitudinale 34, ce qui permet d'écarter ces extrémités avant 32 de la saillie périphérique 22 de l'embout 12 en leur appliquant un effort faible.

On a représenté en figure 10 une autre variante de réalisation du raccord selon l'invention, appl icable au cas où le tuyau 10 en caoutchouc des modes de réalisation précédents est remplacé par un tuyau annelé 56 en matière plastique. Dans ce cas, les moyens de verrouillage 26 peuvent être du même type que précédemment décrit, mais l'insert 14 comporte, sur sa partie arrière, un surmoulage extérieur de caoutchouc ou analogue 58 destiné à assurer une étanchéité avec l'extrémité du tuyau 56 enfilée sur cette partie arrière de l'embout 14.

Comme représenté aux dessins, ce joint surmoulé 58 s'étend de préférence sur une distance supérieure au pas entre deux ondulations successives du tuyau annelé 56, pour une meilleure étanchéité.

Par ailleurs, la distance entre les nervures internes 40 des pièces 28 correspond au pas entre les ondulations du tuyau 56, de telle sorte que ces nervures puissent pénétrer entre ces ondulations et bloquer l'extrémité du tuyau 56 enfilée sur l'embout 14.

Pour le reste, les caractéristiques des moyens de verrouillage 26 et de l'embout 14 sont identiques à celles déjà décrites.

Lorsque le tuyau 56 comprend une extrémité cylindrique (non annelée) enfilée sur l'insert 14, les mêmes moyens de verrouillage 26 peuvent être utilisés si l'extrémité cylindrique du tuyau 56 est formée sur sa surface extérieure avec un bourrelet annulaire qui vient se loger entre les deux nervures annulaires 40 des moyens de verrouillage 26.

L'invention s'applique notamment à tous les raccords des tuyaux de transfert de fluide basse pression utilisés dans l'industrie automobile, ainsi que dans tout autre type d'industrie.

## Revendications

1. Raccord encliquetable pour tuyau de transfert de fluide, en particulier pour véhicule automobile, comprenant un insert tubulaire (14) monté à l'intérieur d'un tuyau souple (10) à raccorder sur un embout tubulaire (12) d'un circuit de fluide, cet embout étant destiné à être introduit de façon étanche à l'intérieur de l'insert (14) précité et comportant une saillie périphérique (22) au voisinage de son extrémité libre, et des moyens (26) de verrouillage de la connexion du tuyau (10) et de l'embout (12), ces moyens (26) entourant le tuyau et l'embout et coopérant avec l'embout par encliquetage élastique pour maintenir l'embout (12) engagé dans l'insert (14), les moyens de verrouillage (26) comprenant, du côté tuyau, une partie annulaire cylindrique (30, 48) entourant le tuyau et le serrant à étanchéité sur l'insert (14) et, du côté de l'embout (12), des pattes longitudinales (34) élastiquement déformables qui sont rattachées à ladite partie annulaire (30) et qui coopèrent par accrochage avec la saillie périphérique (22) de l'embout (12) pour s'opposer à la déconnexion du tuyau et de l'embout, **caractérisé en ce que** les moyens de verrouillage (26) sont formés de deux pièces (28) semi-cylindriques, comprenant des moyens (36, 38) de fixation l'une sur l'autre, et **en ce que** lesdites pattes longitudinales (34) sont rattachées, du côté de l'embout, à deux parties semi-annulaires (32) diamétralement opposées l'une à l'autre et formant des moyens d'accrochage sur la saillie périphérique (22) de l'embout (12).

2. Raccord selon la revendication 1, **caractérisé en ce que** les deux pièces semi-cylindriques (28) sont identiques et leurs moyens (36, 38) de fixation l'une sur l'autre sont du type à encliquetage élastique.

3. Raccord selon la revendication 2, **caractérisé en ce que** les deux pièces semi-cylindriques (28) sont en matière plastique comportant une charge de renforcement, par exemple en polyamide chargé de fibres de verre.

4. Raccord selon l'une des revendications 1 à 3, **caractérisé en ce que** les deux pièces semi-cylindriques (28) sont reliées l'une à l'autre par une charnière souple formée le long d'une génératrice de leur surface cylindrique.

5. Raccord selon l'une des revendications 1 à 4, **caractérisé en ce que** chaque partie semi-annulaire (32) d'accrochage sur l'embout est reliée à l'extrémité opposée (30) des moyens de verrouillage par une seule patte longitudinale (34).

6. Raccord selon l'une des revendications précédentes, **caractérisé en ce que** les extrémités (32) des moyens de verrouillage (26) qui coopèrent par accrochage avec la saillie périphérique (22) de l'embout (12), comprennent des pattes latérales (44) de déverrouillage, permettant, par poussée sur ces pattes dans des directions opposées, d'écarter l'une de l'autre ces extrémités (32) pour les dégager de la saillie périphérique (22) de l'embout (12) et permettre la déconnexion du tuyau (10) et de l'embout (12).

7. Raccord selon l'une des revendications précédentes, **caractérisé en ce que** les pièces semi-cylindriques (28) comprennent une nervure semi-circulaire (52) sur leur face interne, coopérant par butée avec une reprise des efforts axiaux d'arrachement appliqués au tuyau (10) et/ou à l'embout (12).

8. Raccord selon l'une quelconque des revendications précédentes, **caractérisé en ce que** les moyens de verrouillage (26) comprennent des nervures annulaires (40) sur leur surface interne destinée à venir au contact du tuyau (10).

9. Raccord selon la revendication 8, **caractérisé en ce que** les nervures annulaires (40) des moyens de verrouillage sont décalées en quinconce par rapport à des nervures (19) de l'insert qui sont en appui sur la surface interne du tuyau (10).

10. Raccord selon l'une des revendications précédentes, **caractérisé en ce que** le tuyau précité est un tuyau (56) annelé en matière plastique et **en ce qu'**un joint (58) en caoutchouc ou analogue est surmoulé sur la partie de l'insert (14) destinée à être introduite dans le tuyau annelé (56).

11. Raccord selon l'une quelconque des revendications précédentes, **caractérisé en ce que** les deux pièces semi-cylindriques (28) sont métalliques.

## Patentansprüche

1. Einrastbare Verbindung für einen Flüssigkeits-Leitungsschlauch, im Speziellen für ein Kraftfahrzeug, umfassend einen röhrenförmigen Einsatz (14), welcher im Inneren eines Schlauchs (10) angebracht ist, zum Verbinden mit einem röhrenförmigen Ansatzstück (12) eines Flüssigkeitskreislaufs, wobei dieses Ansatzstück dazu bestimmt ist, in abdichtender Weise in das Innere des zuvor erwähnten Einsatzes (14) eingeführt zu werden, und benachbart zu seinem freien Ende eine Umfangsausbeulung (22) und Mittel (26) zur Verriegelung der Verbindung des Schlauches (10) und des Ansatzstücks (12) umfasst, wobei diese Mittel (26) den Schlauch und das Ansatzstück umgeben und mit dem Ansatzstück zum elastischen Einrasten zusammenwirken, um das Ansatzstück (12) in dem Einsatz (14) in Eingriff zu halten, wobei die Mittel zur Verriegelung (26) auf der Schlauchseite ein ringförmiges Zylinderteil (30, 48), welches zum Abdichten an dem Einsatz (14) den Schlauch umgibt und diesen umklammert, und auf der Seite des Ansatzstücks (12) elastisch verformbare longitudinale Klauen (34), welche an dem ringförmigen Teil (30) befestigt sind und durch Verhaken mit der Umfangsausbeulung (22) des Ansatzstücks (12) zusammenwirken, um einem Lösen des Schlauches und des Ansatzstücks voneinander entgegenzuwirken, umfassen, **dadurch gekennzeichnet, dass** die Mittel zur Verriegelung (26) aus zwei halbzylinderförmigen Teilen (28) gebildet sind, welche Mittel (36, 38) zur Befestigung aneinander umfassen, und dass die longitudinalen Klauen (34) auf der Seite des Ansatzstücks an zwei halbringförmigen Teilen (32) befestigt sind, welche einander diametral gegenüberliegen und Mittel zur Verhakung an der Umfangsausbeulung (22) des Ansatzstücks (12) bilden.

2. Verbindung gemäß Anspruch 1, **dadurch gekennzeichnet, dass** die zwei halbzylinderförmigen Teile (28) identisch sind und ihre Mittel (36, 38) zur Befestigung aneinander des Typs zum elastischen Einrasten sind.

3. Verbindung gemäß Anspruch 2, **dadurch gekennzeichnet, dass** die zwei halbzylinderförmigen Teile (28) aus einem Kunststoffmaterial, welches eine Verstärkungsfüllung umfasst, zum Beispiel aus mit Glasfasern gefülltem Polyamid, sind.

4. Verbindung gemäß einem der Ansprüche 1 bis 3, **dadurch gekennzeichnet, dass** die zwei halbkreisförmigen Teile (28) miteinander durch ein weiches Scharnier verbunden sind, das entlang einer Mantellinie ihrer Zylinderoberfläche ausgebildet ist.

5. Verbindung gemäß einem der Ansprüche 1 bis 4, **dadurch gekennzeichnet, dass** jedes halbkreisförmige Teil (32) zum Verhaken mit dem Ansatzstück durch eine einzige longitudinale Klaue (34) mit einem gegenüberliegenden Ende (30) der Mittel zur Verriegelung verbunden ist.

6. Verbindung gemäß einem der vorhergehenden Ansprüche, **dadurch gekennzeichnet, dass** die Enden (32) der Mittel zur Verriegelung (26), welche zum Verhaken mit der Umgebungsausbeulung (22) des Ansatzstücks (12) zusammenwirken, laterale Klauen (44) zur Freigabe umfassen, welche es ermöglichen, durch Drücken in entgegengesetzte Richtungen auf diese Klauen, eines der anderen dieser Enden (32) aufzuspreizen, um diese von der Umfangsausbeulung (22) des Ansatzstücks (12) zu lösen und das Lösen des Schlauches (10) und des Ansatzstücks (12) voneinander zu ermöglichen.

7. Verbindung gemäß einem beliebigen der vorhergehenden Ansprüche, **dadurch gekennzeichnet, dass** die halbzylinderförmigen Teile (28) an ihrer inneren Seite eine halbkreisförmige Rippe (52) umfassen, welche durch Anschlag mit einem Aufnehmen der auf den Schlauch (10) und/oder das Ansatzstück (12) ausgeübten Auszieh-Axialbeanspruchungen zusammenwirkt.

8. Verbindung gemäß Anspruch 8, **dadurch gekennzeichnet, dass** die Mittel zur Verriegelung (26) auf ihrer inneren Oberfläche ringförmige Rippen (40) umfassen, welche dazu bestimmt sind, in Kontakt mit dem Schlauch (10) zu kommen.

9. Verbindung gemäß Anspruch 8, **dadurch gekennzeichnet, dass** die ringförmigen Rippen (40) der Mittel zur Verriegelung im Vergleich zu Rippen (19) des Einsatzes, welche dem Halt an der inneren Oberfläche des Schlauches (10) dienen, versetzt angeordnet sind.

10. Verbindung gemäß einem der vorhergehenden Ansprüche, **dadurch gekennzeichnet, dass** der zuvor genannte Schlauch ein Balgelement (56) aus einem Kunststoffmaterial ist, und dass eine Gummidichtung oder Vergleichbares auf dem Teil des Einsatzes (14), der dazu bestimmt ist, in das Balgelement (56) eingeführt zu werden, ausgebildet ist.

11. Verbindung gemäß einem beliebigen der vorhergehenden Ansprüche, **dadurch gekennzeichnet, dass** die zwei halbzylinderförmigen Teile (28) metallisch sind.

## Claims

1. A snap-fastenable coupling for a fluid transfer hose, in particular for a motor vehicle, the coupling comprising a tubular insert (14) mounted inside a flexible hose (10) for connecting to a tubular endpiece (12) of a fluid circuit, the endpiece being designed to be inserted in sealed manner inside the said insert (14) and having a peripheral projection (22) in the vicinity of its free end, and locking means (26) for locking the connection between the hose (10) and the endpiece (12), said means (26) surrounding the hose and the endpiece and co-operating with the endpiece by resilient snap-fastening to hold the endpiece (12) engaged in the insert (14), the locking means (26) comprising, at their hose end, a cylindrical annular portion (30, 48) surrounding the hose and clamping it in sealed manner on the insert (14), and at their endpiece end, elastically deformable longitudinal tabs (34) which are attached to said annular portion (30) and which co-operate by catching on the peripheral projection (22) of the endpiece (12) to oppose disconnection of the hose from the endpiece, the coupling being **characterized in that** the locking means (26) are formed by two semicylindrical pieces (28) having fixing means (36, 38) for fixing them one to the other, and **in that** said longitudinal tabs (34) are connected, at their endpiece end, to two semi-annular portions (32) that are diametrically opposite each other and that form means for catching on the peripheral projection (22) of the endpiece (12).

2. A coupling according to claim 1, **characterized in that** the two semicylindrical pieces (28) are identical and their fixing means (36, 38) for fixing them one to the other are of the resilient snap-fastening type.

3. A coupling according to claim 2, **characterized in that** the two semicylindrical pieces (28) are made of plastics material including a reinforcing filler, e.g. of polyamide filled with glass fibers.

4. A coupling according to any one of claims 1 to 3, **characterized in that** the two semicylindrical pieces (28) are connected to each other by a flexible hinge formed along a generator line of their cylindrical surface.

5. A coupling according to any one of claims 1 to 4, **characterized in that** each semi-annular portion (32) for catching on the endpiece is connected to the opposite end (30) of the locking means by means of a respective single longitudinal tab (34).

6. A coupling according to any preceding claim, **characterized in that** the ends (32) of the locking means (26) which co-operate with the peripheral projection (22) of the endpiece (12) by catching thereon have unlocking side tabs (44) making it possible by applying thrust to said tabs in opposite directions, to move said ends (32) apart from each other so as to disengage the peripheral projection (22) of the endpiece (12), thereby enabling the hose (10) to be disconnected from the endpiece (12).

7. A coupling according to any preceding claim, **characterized in that** the semicylindrical pieces (28) have respective semicircular ribs (52) on their inside faces that co-operate by abutment and take up the axial separation forces applied to the hose (10) and/or the endpiece (12).

8. A coupling according to any preceding claim, **characterized in that** the locking means comprise annular ribs (40) on their inside surfaces for coming into contact with the hose (10).

9. A coupling according to claim 8, **characterized in that** the annular ribs (40) of the locking means are offset in a staggered configuration relative to the ribs (19) of the insert which bear against the inside surface of the hose (10).

10. A coupling according to any preceding claim, **characterized in that** said hose is a ringed hose (56) of plastics material, and **in that** a gasket (58) of rubber or the like is overmolded onto the portion of the insert (14) that is to be inserted into the ringed hose (56).

11. A coupling according to any preceding claim, **characterized in that** the two semicylindrical pieces (28) are made of metal.
